# FASCICULE DE BREVET EUROPEEN

(11) **EP 1 910 161 B1**
(45) Date de publication et mention de la délivrance du brevet: **24.12.2008**
(21) Numéro de dépôt: 06778768.9
(22) Date de dépôt: 04.07.2006
(51) Int. Cl.: B63B 1/12, B63B 1/20, B63B 1/24

(54) **BATEAU MULTICOQUE A GRANDE VITESSE**
HOCHGESCHWINDIGKEITS-MEHRRUMPFBOOT
HIGH-SPEED MULTIHULL BOAT

(30) Priorité: 12.07.2005 FR 0507477
(43) Date de publication de la demande: 16.04.2008
(73) Titulaire: Sorrentino, Richard, 13014 Marseille (FR)
(72) Inventeur: Sorrentino, Richard, 13014 Marseille (FR)
(86) Numéro de dépôt international: PCT/FR2006/001587
(87) Numéro de publication internationale: WO 2007/006907

(56) Documents cités:
- FR-A- 1 523 480
- FR-A- 2 661 652
- US-A- 4 091 761
- US-B1- 6 708 642

## Description

La présente invention a pour objet un nouveau type de bateau multicoque à grande vitesse.

Le secteur technique de l'invention est la fabrication de navire multicoque utilisant la pression aérodynamique de l'air passant entre ses coques pour soulever celles-ci, et donc l'ensemble du navire, afin de réduire sa surface mouillée et lui permettre ainsi d'aller plus vite.

On connaît en effet différents types de bateau multicoques à grande vitesse, utilisant divers concepts de coques pour atteindre ce résultat et dont certains ont fait l'objet de demandes de brevet, tels que :
- l'utilisation de foils ou ailerons (hydrofoils) partiellement ou totalement immergés dans le sens de leur longueur et dont la surface inclinée permet d'obtenir un appui hydrodynamique pour faire déjauger et augmenter donc la vitesse des navires, tel que ceux décrits dans la demande de brevet EP 694 008 publiée le 2 janvier 1997 concernant un hydroptère à voile ; un tel concept ne fonctionne bien cependant que par mer assez calme car sinon il est nécessaire d'asservir l'inclinaison des ailerons et le pilotage du bateau à la hauteur et la fréquence des vagues pour conserver toujours un appui de ces ailerons dans l'eau et sans que la coque déjaugée ne vienne heurter trop violemment la surface de l'eau.
- la combinaison de différents éléments transformant le bateau soit en monocoque soit en multicoques, tel que décrit dans la demande de brevet EP 1082 252 publiée le 7 mai 2003 et décrivant un bateau hybride ultrarapide dont les coques latérales ont une profondeur inférieure à la profondeur de la coque centrale et disposant de plusieurs ailerons porteurs hydrodynamiques générateurs de surélévation, un tel concept est assez complexe et d'une grande instabilité, et son efficacité non démontrée.
- l'utilisation d'un effet entonnoir entre les coques pour que la pression d'air augmentant alors de l'avant vers l'arrière assure une sustentation aux navires, tel que décrit dans la demande de brevet FR 2661 652 publiée le 7 mai 1990 qui enseigne une ou plusieurs coques centrales plus courtes que les coques latérales et disposées en retrait par rapport à celles-ci, chaque coque possédant une largeur augmentant de façon continue de son extrémité avant jusqu'à son extrémité arrière ; un tel concept est intéressant mais n'est pas suffisant pour obtenir de bonnes performances.
- l'utilisation de la portance aérodynamique grâces à des formes sustentatrices situées, soit de part et d'autre du bateau, comme des ailes d'avions, soit entre deux coques comme décrit dans la demande de brevet FR 2765 180 publiée le 31 décembre 1998 décrivant de telles formes aérodynamiques pour les bras de liaison carénés reliant la coque centrale principale du navire avec des coques-flotteurs latérales.

Dans ce dernier concept pour avoir un véritable effet de sustentation, il serait préférable de placer de telles ailes le plus près possible du plan d'eau pour créer des tuyères à effet de sol : les bateaux utilisant ce seul effet pour se déplacer à grandes vitesses peuvent cependant difficilement naviguer par mer formée du fait de la proximité de ces formes avec le plan d'eau ; leur temps potentiel d'exploitation est de ce fait faible.

De plus, les difficultés que rencontre ce type de réalisation est que comme tout navire la résistance à l'avancement dans l'eau croît rapidement avec la vitesse, ce qui incite justement au développement de concepts permettant de diminuer la surface mouillée des coques comme ceux décrits ci-dessus: dans ce dernier exemple cependant la vitesse du bateau reste, si celui-ci n'utilise que partiellement l'effet de sol (en ayant les ailes relativement loin du plan d'eau), à des valeurs inférieures à celles qui seraient nécessaires pour que les surfaces des ailes de sustentation deviennent efficaces et soulèvent suffisamment le bateau pour que sa résistance à l'avancement dans l'eau diminue significativement. Cette difficulté peut être en partie résolue, soit par l'augmentation de la puissance, du nombre de moteurs de propulsion, ce qui va cependant au détriment du poids à vide donc de la charge utile, de la consommation, du coût d'investissement et de la maintenance, soit par la combinaison d'autres moyens, tels que les ailerons immergés orientables et/ou des coefficient de finesse et de rapports spécifiques entre les différentes carènes, tel que cela a été décrit dans la demande de brevet citée ci-dessus FR 2765 180.

Le problème posé est en effet de réaliser un navire apte à aller à grande vitesse, sans nécessiter de grosses puissances de propulsion par rapport à son déplacement et pouvant garder ses hautes performances même par mer formée, sans avoir les inconvénients des types de navire cités précédemment et permettant de soulever les coques au maximum hors d'eau afin justement d'atteindre de grandes vitesses et de s'y maintenir.

Une solution au problème posé est un bateau multicoque à grande vitesse tel que revendiqué dans la revendication 1.

D'autres modes préférentiels de réalisation sont décrits ci-après et représentés sur les figures jointes. Le résultat est un nouveau type de bateau multicoque à grande vitesse qui répond au problème posé et résout les difficultés rencontrées dans les types de bateau actuels en présentant des formes moins influencées par les vagues et des moyens d'augmenter la portance aérodynamique et d'effets de surface, dès les faibles vitesses afin de soulever suffisamment le bateau avant que la résistance à l'avancement dans l'eau devienne prohibitive.

Les dispositions suivant l'invention apporte des qualités qui ne se retrouvent pas dans les bateaux actuels.

Du fait de la sustentation aérienne (ou portance aérodynamique) particulièrement importante due au coussin d'air autoformé avec utilisation maximum de l'effet de sol, les surfaces mouillées sont très réduites.à vitesse nominale. De ce fait les résistances à l'avancement des parties restant immergées sont particulièrement faibles, ce qui permet, suivant le type d'application de diviser au moins par deux les motorisations nécessaires : on gagne ainsi du poids sur la motorisation elle-même et aussi sur les réserves de carburant, ce qui peut être utilisé pour augmenter la charge utile ou pour gagner en vitesse.

Ce type de bateau peut naviguer dans des gammes de vitesse au-dessus de 30 et jusqu'à 60 noeuds avec un bon coefficient d'utilisation annuel alors que la plupart des bateaux rapides actuels atteignent difficilement les 35 noeuds.

Du fait de l'action conjuguée du coussin d'air, de l'effet multicoques, et des hydrofoils, la stabilité du bateau est largement accrue et les mouvements dus au vagues très limités. De ce fait le confort des passagers ou des plaisanciers est très largement augmenté. De plus, du fait de la diminution très sensible des temps de transit combinée à l'absence de mouvements violents, même avec des mers relativement formées, la fatigue et l'impatience des passagers est très largement diminuée. Il est même possible, sur certains trajets, de ne plus avoir de cas de mal de mer alors que c'est le lot commun dès que la mer se forme et que ceci représente la principale cause d'inconfort et du rejet, pour beaucoup de personnes, des traversées maritimes ou des excursions en mer.

Il faut noter aussi, que du fait de leur conception, les bateaux suivant l'invention peuvent être plus larges que les autres bateaux ce qui apporte aussi un confort et une habitabilité importante. Par exemple : un bateau de croisière de 25 m de long peut avoir une largeur de 12 à 13 m ce qui donne une surface de pont d'environ 320 m2 ce qui est beaucoup plus que la plupart des autres bateaux de cette longueur.

Les bateaux suivant l'invention peuvent être propulsés par des hélices immergées conventionnelles, des propulseurs à jet d'eau (hydrojet), des hélices aériennes ou des hélices semi immergées de surface, ou une combinaison de ces moyens.

Suivant le type de construction un bateau suivant l'invention pourrait fonctionner à 60 noeuds en vitesse de pointe avec 2000 CV de motorisation alors que l'on voit sur les revues spécialisées, des bateaux possédant des surfaces de pont inférieures aux 320 m² donnés ci-dessus, avec des motorisations allant jusqu'à 20000 CV pour les mêmes vitesses annoncées.

On pourrait citer d'autres avantages de la présente invention mais ceux cités ci-dessus en montrent déjà suffisamment pour en prouver la nouveauté et l'intérêt.

La description et les dessins ci-joints représentent des exemples de réalisation de l'invention mais n'ont aucun caractère limitatif : d'autres réalisations sont possibles dans le cadre de la portée et l'étendue de cette invention.
La figure 1 est une représentation schématique en coupe latérale d'une forme aérosustentative connue des bateaux utilisant la portance aérodynamique à grande vitesse.
La figure 2 est une vue schématique en coupe longitudinale et verticale suivant A*,* A' de la figure 3 d'un navire suivant l'invention.
La figure 3 est une vue schématique en coupe horizontale suivant B, B' de la figure 2.
La figure 4A est une vue schématique en coupe transversale arrière suivant C, C' de la figure 3.
La figure 4B est une vue schématique en coupe transversale avant suivant D, D' de la figure 3.
La figure 5 est une vue schématisée en coupe horizontale suivant B, B' de la figure 2 d'un navire suivant un autre mode de réalisation de l'invention que celui de la figure 3.
Les figures 6A et 6B sont des vues en coupe de section arrière suivant C, C' de la figure 3 d'autres modes de réalisation de l'invention.
Les figure 7A et 7B sont des vues en coupe arrière et avant, suivant C, C' et D, D' respectivement, de la figure 3 d'un autre mode de réalisation d'un navire suivant l'invention.
La figure 8 est une vue en coupe longitudinale et verticale suivant A, A' de la figure 3 d'un autre exemple de réalisation de navire suivant la présente invention.

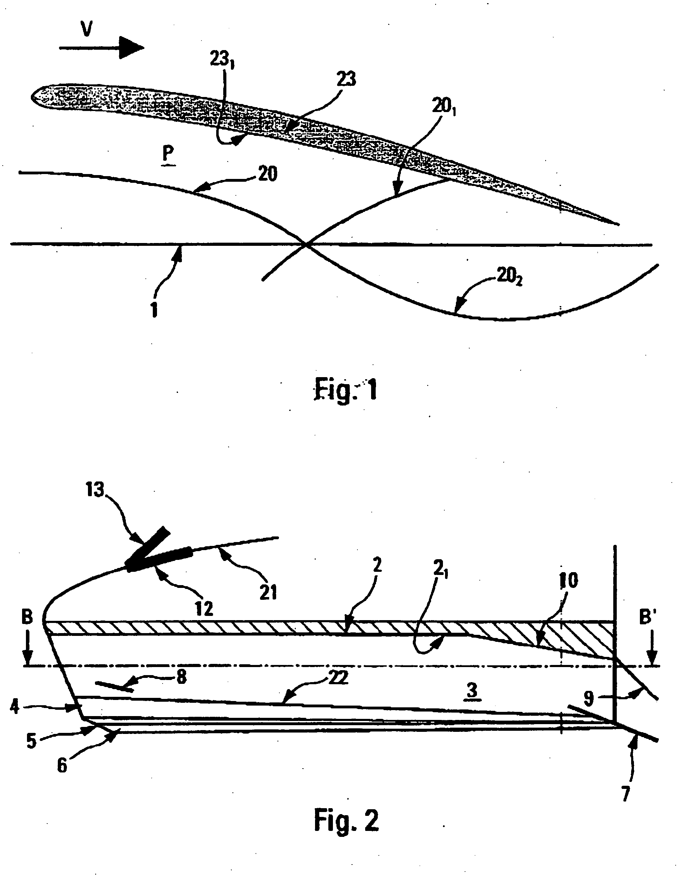

Comme indiqué précédemment, la forme aérosustentative connue 23 représentée sur la figure 1 est disposée au plus près de la surface du plan d'eau 1 pour augmenter la force sustentative par effet de surface entre sa face inférieure 23₁ et la surface de l'eau grâce à l'augmentation de la pression P sous l'aile 23 quand la vitesse V relative augmente entre le navire et l'air ambiant, et cela jusqu'à équilibre. Cependant, quand des vagues 20 se forment, elle viennent heurter 20₁ l'arrière de l'aile portante 23, pouvant l' endommager, et de toute façon freinent le navire ; puis, lors du passage du creux 20₂ des vagues, la portance créée par l'effet de surface diminue, créant un déséquilibre et un très grand inconfort de navigation, ce qui fait ralentir les navires.

La solution le plus souvent adoptée pour diminuer cet inconvénient est alors d'éloigner suffisamment l'aile portante 23 du plan d'eau, mais dans ce cas on perd une grande partie de la portance aérienne du fait de la diminution sensible de l'effet de surface.

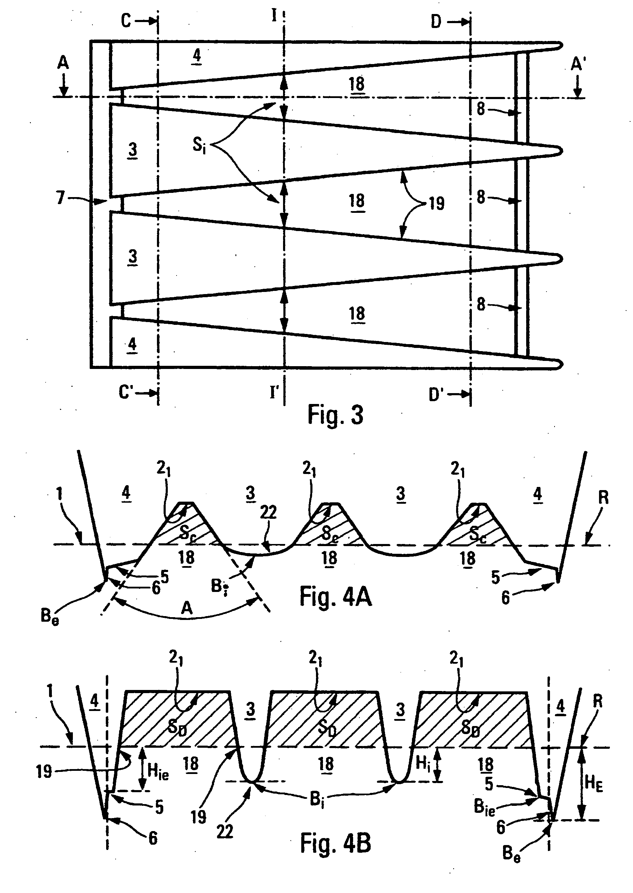

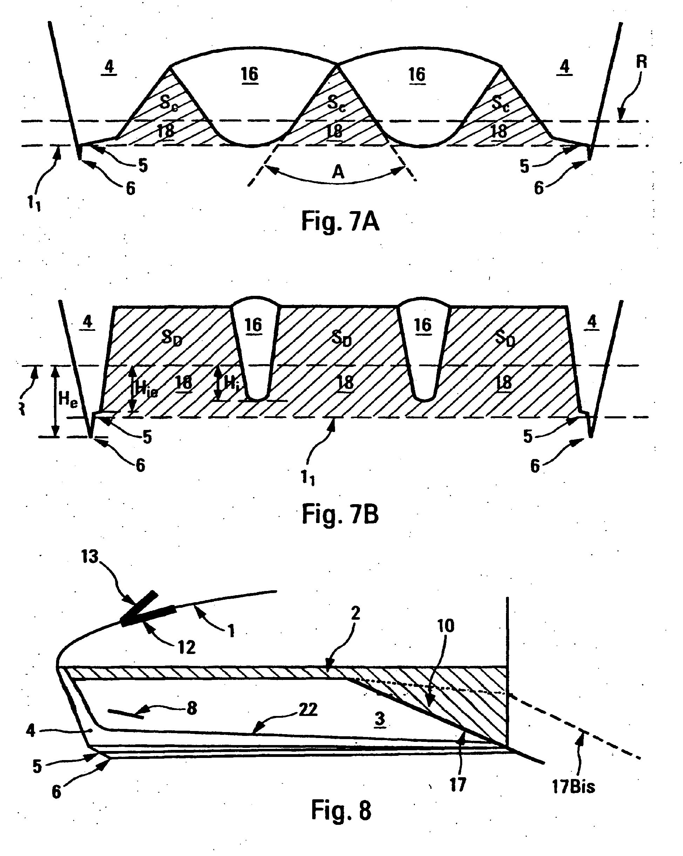

Dans la présente invention le bateau multicoque peut comporter soit trois coques ou plus tel que représenté avec quatre coques rigides ou souples sur l'ensemble des figures 3, 4A, 4B, 5, 6A, 6B, 7A et 7B ; mais il pourrait n'en comporter que deux avec des coques extérieures 4 sans coques intérieures 3 ou 16 mais, comme représenté sur les figures 4A, 4B, 7A et 7B, constituées d'au moins deux parties longitudinales formant chacune, une quasi demi coque, comme délimitées schématiquement par des pointillés verticaux sur les coques 4 de la figure 4B: la hauteur Hₑ de la partie extérieure 6 est plus grande que celle Hₑ de la partie intérieure 5 de la même coque, les dites hauteurs Hₑ et Hᵢₑ étant considérées dans le même plan de coupe transversale de l'ensemble de la coque et, entre la même référence horizontale R, qui peut être dans cet exemple de réalisation la surface d'une étendue d'eau calme 1 sur lequel flotte le navire, et la partie la plus basse, respectivement Bₑ et Bᵢₑ du fond de chaque partie de cette même coque.

Dans le cas de coques centrales, les hauteurs H des coques, entre toujours la même référence R horizontale et la partie B la plus basse de leur fond, sont plus grandes pour les coques extérieures 4 que pour les coques centrales 3 dans le même plan de coupe transversale de l'avant à l'arrière de l'ensemble de la coque.

En fait, les hauteurs H de coques telles que définies ci-dessus, peuvent être, et même doivent être pour des coques souples telles que décrites ci-après, considérées hors d'eau, la référence R pouvant être tout plan horizontal situé au-dessus de la partie basse B de la coque de moins grande hauteur.

Quel que soit le nombre et le type de coques, le bateau étant considéré à flot sur une étendue d'eau calme 1, les surfaces Sᵢ de toute coupe transversale I I' de l'espace 18 délimitée entre deux parois 19 de coques en vis-à-vis, la surface de l'eau 1 et la face inférieure 2₁ du pont 2 en regard de cette surface diminue de l'avant vers l'arrière : à titre d'exemple les surfaces S_{c} des figures 4A et 7A correspondant à la coupe arrière CC' de la figure 3 sont moins importantes que les surfaces. S_{D} des figures 4B et 7B correspondant à la coupe avant DD' de la figure 3.

Les coques 3, 4 sont solidarisées par toutes structures résistantes qui les réunissent entre elles au niveau du pont 2 par des surfaces étanches depuis l'avant du bateau jusqu'à l'arrière, afin de former une barrière étanche entre le dessous et le dessus du bateau.

Ces surfaces étanches inférieures 2₁ des parties de pont 2 situées entre deux coques adjacentes 3, 4 sont horizontales, à vitesse nominale, vers l'avant du navire comme représenté sur les figures 2 et 8 et s'inclinent vers la surface de l'eau 1 dans la partie arrière 10 du bateau.

Sur la figure 8 pour des navires naviguant sur des étendues d'eau calme, la partie arrière 10, inclinée de l'ordre de 4°, peut descendre jusqu'au niveau de l'eau et même en dessous de celui-ci, constituant une sorte de volet fixe bouchant complètement les espaces 18 entre les coques dans la partie arrière du bateau. Cette partie 17 de pont, se prolongeant sous l'eau, se confond en fait avec l'hydrofoil arrière 7 représenté dans les autres modes de réalisation.

Ce volet fixe 17 peut suivant les réalisations, prendre la position 17 ou 17 bis ou éventuellement une position intermédiaire. Dans tous les cas l'extrémité du volet fixe constitue un hydrofoil arrière. Dans le cas ou ce volet fixe est prolongé en arrière de la poupe du bateau comme en position 17 bis, les extrémités latérales (droite et gauche) du volet fixe sont obstruées entre le volet, la poupe du navire et la surface de l'eau par une flasque verticale étanche. Cette flasque solidarise l'extrémité du volet fixe avec la poupe du navire. Elle assure aussi le maintien de la surpression d'air sous le volet. Pour ce faire, cette flasque descend dans l'eau au même niveau que la partie la plus basse des coques extérieures.

En effet, dans un mode préférentiel de réalisation, le bateau suivant l'invention comporte des ailerons hydrofoils 8 situés à l'avant et à l'arrière 7 de ces coques 3, 4 qui sont en partie émergées à vitesse nominale, soit en fait un extrados toujours émergé (sauf entre les coques au passage des vagues) et un intrados presque toujours totalement immergé sur toute sa longueur.

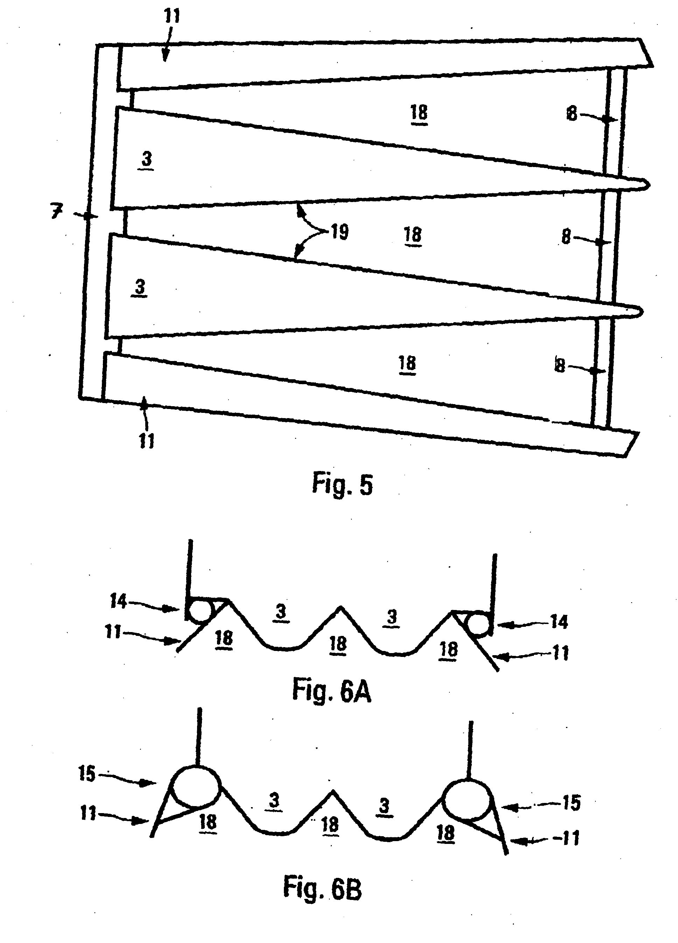

Ces dits ailerons 7, 8 ont pour longueur la largeur du bateau et relient les coques entre elles, tel qu'on peut le voir sur les figures 3 et 5. Ils font, leurs bords avant étant relevés par rapport à leurs bords arrière, préférentiellement un angle compris entre 2 et 6° à vitesse nominale par rapport au plan d'eau 1.

Les ailerons hydrofoils arrière 7 sont prolongés vers l'arrière, en arrière de la poupe du bateau, formant ainsi un aileron continu d'un côté à l'autre de celui-ci, et viennent s'insérer en partie entre les espaces séparant les coques adjacentes.

Les ailerons hydrofoils avant 8 sont soit totalement entre les coques pour leur permettre de s'échouer (« beacher ») par l'avant, soit partiellement ou totalement en dessous des coques en vis-à-vis.

Comme on peut le voir entre les figures 4A et 4B d'une part et 7A et 7B d'autre part, l'angle A formé par les deux parois 19 de toutes coques adjacentes 3, 4 en vis-à-vis augmente de l'avant vers l'arrière.

De plus, le fond 22 des coques centrales 3 est plus incliné de l'avant vers l'arrière que celui 6 des coques latérales extérieures 4, comme on peut le voir sur les figures 2 et 8, et dans le cas où les coques extérieures 4 sont en deux parties longitudinales de hauteurs différentes, le fond 5 de la partie intérieure de ces coques 4 est plus incliné de l'avant vers l'arrière que celui du fond 6 de la partie extérieure de ces mêmes coques.

Suivant les modes de réalisation des figures 3 et 5, les coques 4 extérieures sont dissymétriques et plus étroites que les coques centrales 3, et dans le cas où ces coques extérieures sont en deux parties de différentes hauteurs, la partie extérieure 6 de ces coques extérieures est plus étroite que la partie intérieure 5 de ces mêmes coques.

La partie extérieure 6 de ces coques peut être constituée par des dérives latérales ou comportée des dérives latérales additionnelles ou rapportées, et de préférence, sans que cela soit obligatoire, les coques extérieures 4 sont plus longues que les coques centrales 3.

Suivant des modes de réalisation particuliers, tel que présenté sur les figures 6A, 6B, 7A et 7B, une partie au moins de ces coques 11, 14, 15, 16 est réalisée en matériau souple apte à fléchir partiellement sous la pression hydrodynamique de l'eau 20 et à assurer l'étanchéité à l'air des volumes 18 que ces coques 16 délimitent avec leurs coques adjacentes, au moins sur l'arrière et jusqu'au déjaugeage maximum du bateau pour ce qui concerne les coques intérieures 16 et dans toutes les situations pour ce qui concerne les coques extérieures 11, 14, 15.

Ainsi l'invention porte aussi sur tout bateau comportant une combinaison à la fois de coques souples intérieures et de coques souples extérieures, avec bien sûr au moins deux coques rigides. Dans un mode préférentiel de réalisation un tel bateau peut comporter cinq coques, avec une coque souple centrale, une coque rigide de part et d'autre, et une coque souple de part et d'autre des deux coques rigides à l'extérieur (ce qui correspond en fait à un catamaran à deux coques rigides, tel que connu à ce jour, mais avec une coque souple centrale entre ces deux coques rigides et deux coques souples à l'extérieur de celles-ci).

Dans les variantes des figures 6A et 6B, ce sont les coques extérieures 14, 15 qui sont constituées par des jupes 11 en matériau souple couvrant le côté du bateau depuis l'avant jusqu'à l'arrière et dont la longueur est sensiblement égale à celle des coques extérieures. Ces dites jupes sont positionnées à une distance des coques intérieures situées en vis-à-vis qui diminuent de l'avant vers l'arrière, comme pour des coques rigides extérieures.

Ces jupes 11 en partant du haut vers le bas sont sensiblement inclinées de l'intérieur vers l'extérieur et sont maintenues en position par le haut, en permettant de garder la pression hydrodynamique de l'air sous le pont dans l'espace 18 sans entraîner d'eau.

Leur souplesse leur permet de fléchir partiellement sous la pression hydrodynamique pour venir effleurer la surface de l'eau et laisser passer les vagues, sans toutefois laisser passer l'air vers l'extérieur.

De préférence, un dispositif permet d'ajuster la poussée de maintien de la jupe en position d'étanchéité maximum, en fonction de la vitesse du bateau, de sa charge, et des conditions de mer et de vent, tel que par exemple :
- suivant la figure 6A un boudin ou boyau longitudinal 14 rempli avec un gaz à pression variable est appliquée ou collée contre la jupe dans sa partie supérieure extérieure.
- ladite jupe suivant la figure 6B est fixée en dessous d'un ou plusieurs boudins ou boyaux longitudinaux 15 remplis d'un gaz à pression variable.

Dans les modes de réalisation des figures 7A et 7B ce sont les coques intérieures 16, ou la partie inférieure de ces dernières, qui sont réalisées avec la même technique que les boudins de bateaux pneumatiques. Elles ont la même forme extérieure que les coques de la version rigide de base précédemment décrite ; toutefois, quand elles ne participent pas à la rigidité de la structure, elles peuvent être réalisées dans un tissu beaucoup plus léger et souple. Elles sont remplies par un gaz à une pression ajustée en fonction de la vitesse du bateau et légèrement supérieure à la pression dynamique de l'air qui est présente à grande vitesse sous le bateau. Leur souplesse leur permet de fléchir partiellement sous la pression hydrodynamique en restant en contact avec la surface de l'eau et laissant passer les vagues sous elles, sans toutefois laisser passer l'air.

En effet, au fur et à mesure de la prise de vitesse du navire et de son déjaugeage grâce aux forces sustentatrices crées par l'air pénétrant dans les espaces 18 entre les coques, et du fait, suivant la présente invention, des différentes hauteurs de coques et/ou demi coques, plus importantes pour celles extérieures que pour celles intérieures, la surface mouillée totale des coques diminue jusqu'à ce que le fond Bᵢ des coques centrales 3, 16 et même celui Bᵢ, des parties intérieures 5 des coques extérieures 4, comme représenté sur les figures 7A et 7B effleurent la surface de l'eau 1, permettant une diminution importante de la surface totale mouillée : ceci permet d'atteindre et de maintenir une grande vitesse sans nécessiter une grosse puissance de propulsion, l'air étant maintenu à l'intérieur des coques par les coques latérales et/ou leur partie extérieur 6, de hauteur plus importante, qui restent ainsi toujours immergées, assurant également une meilleure stabilité à l'ensemble du navire.

Pour augmenter encore l'effet de sustentation de l'air pénétrant dans les espaces 18 entre les coques, le bateau suivant l'invention comprend des volets 9 mobiles disposés à l'arrière entre deux coques 3, 4 en vis-à-vis et obturant au moins partiellement le passage de l'air, lesquels volets étant aptes à rester en position fermée sous et malgré la seule pression dynamique de l'air et à s'effacer partiellement au passage de l'eau, surtout quand il s'agit de vagues 20 telles que représentées sur la figure 1.

De tels volets peuvent être rigides ou semi rigides, et maintenus en position fermée par des ressorts gardant la pression dynamique de l'air sous le pont 2 et fléchissant partiellement sous la pression hydrodynamique de l'eau au passage des vagues, mais sans toutefois laisser passer beaucoup d'air ou même pas du tout.

Un dispositif permet préférentiellement d'ajuster la poussée et la rigidité des volets mobiles en fonction de la vitesse du bateau, de sa charge et des conditions de mer et de vent, tel que par exemple :
- un boyau rempli avec un gaz à pression variable appliqué ou collé contre le volet dans sa partie supérieure,
- ou une fixation du volet en dessous d'un boyau rempli d'un gaz à pression variable.

Ces volets mobiles pourraient être également constitués d'enveloppes étanches en tissu léger et souple maintenues en place par des ressorts ou gonflés d'un gaz à pression réglable dont la pression est suffisante pour éviter le passage de l'air à l'arrière des tunnels 18 mais assez faible pour permettre à l'enveloppe de s'effacer partiellement sous la poussée hydraulique des vagues.

Il est également possible d'utiliser des volets fluides ou des rideaux d'eau, seuls ou en combinaison avec des volets rigides ou semi rigides ou constitués de matériau souple, tel qu'indiqué ci-dessus. Ces rideaux d'eau peuvent être obtenus par pompage de l'eau de mer dans une crépine.

Dans un mode de réalisation particulier l'air de refroidissement des moteurs de propulsion et des équipements de bord est injecté sous le pont 2 dans au moins un espace délimité 18 entre deux coques en vis-à-vis.

Le système de propulsion peut comporter au moins un moyen de régler ou d'ajuster le coupe moteur du ou des moyens de propulsion, tels que par des hélices à pas variables et/ou par des variateurs de vitesse.

Pour des raisons de sécurité, afin qu'à grande vitesse ou par grande tempête, le bateau ne risque pas de se retourner par soulèvement de son avant, il comporte des volets de sécurité 12, 13 articulés et situés au-dessus et à l'avant du bateau, lesquels volets étant plaqués 12 contre les superstructures 21 du bateau en position normale et étant aptes à être soulevés 13 par rotation vers l'avant en position de sécurité.

## Revendications

1. Bateau multicoque à grande vitesse comportant au moins trois coques (3, 4), y compris des coques externes et au moins une coque centrale et dont, le bateau étant considéré à flot à l'arrêt sur une étendue d'eau calme (1), les surfaces (Si) des coupes transversales d'un espace(18) délimité premièrement entre deux parois (19) en vis-à-vis de deux coques adjacentes, deuxièmement par la surface de l'eau (1) et troisièmement par la face inférieure (21) du pont (2) en regard de cette surface d'eau, diminuent de l'avant vers l'arrière, **caractérisé en ce que** le bateau étant maintenant considéré hors de l'eau, les hauteurs (H) des coques, entre une même référence (R) horizontale et la partie (B) la plus basse du fond de ces coques, sont plus grandes pour les coques extérieures (4) que pour au moins une coque centrale (3) dans le même plan de coupe transversale.

2. Bateau multicoque suivants la revendication 1, **caractérisé en ce que** dans une coupe transversale, l'angle (A) formé par deux parois en vis-à-vis (19) de toutes coques adjacentes (3, 4) augmente de l'avant vers l'arrière.

3. Bateau multicoque suivant la revendication 1, **caractérisé en ce que** le fond (22) des coques centrales (3) est plus incliné de l'avant vers l'arrière que celui (6) des coques latérales extérieures (4).

4. Bateau multicoque suivant la revendication 1, **caractérisé en ce que** les coques extérieures (4) sont dissymétriques, plus étroites, plus longues vers l'avant du bateau que les coques centrales et constituées d'au moins deux parties longitudinales, formant chacune une quasi demie-coque, dont la hauteur de la partie extérieure (6) est plus grande que celle de la partie intérieure (5) de la même coque, lesdites hauteurs étant considérées dans le même plan de coupe transversale et entre la même référence (R) horizontale et la partie la plus basse (Bi)du fond de chaque partie de cette même coque.

5. Bateau multicoque suivant la revendication 1, pouvant comporter une combinaison de coques souples et rigides **caractérisé en ce qu'**une partie (11, 14, 15, 16) de ces coques dites souples sont réalisées soit par des coques souples pour ce qui concerne les coques intérieures soit par des jupes souples en ce qui concerne les coques extérieures et constituées en matériaux souples aptes à fléchir partiellement sous la pression hydrodynamique de l'eau (20) et à assurer l'étanchéité à l'air des volumes (18) délimités par les parois en vis à vis de deux coques adjacentes (3, 4).

6. Bateau multicoque selon la revendication 1, **caractérisé en ce que** les faces inférieures (21) étanches des parties de pont (2) situées entre deux coques adjacentes (3, 4)s'inclinent vers la surface de l'eau (1) dans la partie arrière (10) du bateau.

7. Bateau multicoque selon la revendication 1, **caractérisé en ce qu'**il comprend des volets (9) mobiles disposés à l'arrière entre deux coques (3, 4) en vis-à-vis et obturant au moins partiellement le passage de l'air, lesquels volets étant aptes à rester fermés sous la seule pression dynamique de l'air et à s'effacer partiellement au passage de l'eau (20).

8. Bateau multicoque suivant la revendication 1, **caractérisé en ce qu'**il comporte des ailerons hydrofoils (8) situés à l'avant du bateau entre deux coques quelconques et au moins un Hydrofoil situé en arrière de l'ensemble des coques,(7) formant un aileron continu de longueur égale à la largeur du bateau, s'insèrent partiellement dans les espaces séparant deux coques adjacentes(3, 4), solidarisant l'ensemble des coques entre elles et sont en partie émergés à vitesse nominale.

9. Bateau multicoque suivant la revendication 1, **caractérisé en ce que** l'air de refroidissement des moteurs de propulsion et des équipements de bord est injecté sous le pont (2) dans au moins un espace délimité (18) entre deux coques en vis-à-vis.

10. Bateau multicoque suivant la revendication 1, **caractérisé en ce qu'**il comporte des volets de sécurité (12, 13) articulés et situés au-dessus et à l'avant du bateau, lesquels volets étant plaqués (12) contre les superstructures (21) du bateau en position normale et étant aptes à être soulevés (13) vers l'avant en position de sécurité.

## Claims

1. : A high-speed multi-hull boat comprising of at least three hulls (3, 4), including outer hulls and at least one central hull, and in which, with the boat being considered to be floating and stationary on a stretch of calm water (1), the cross-sectional areas (Si) of a space (18) which is created between two opposing hull walls (19) of adjacent hull, the surface of the water (1), and a bottom face (21) of a deck (2) facing the water surface, decrease from the bow to the stem, wherein the boat being considered out of the water, heights (H) of the hulls, between a horizontal reference (R) and a lowest parts of their bottom of hull, are greater for the outer hulls (4) than for the at least one central hulls (3) in the same cross sectional plane.

2. : A multi-hull boat according to claim 1, wherein an angle (A) formed by the two opposing hull walls (19) of all adjacent hulls (3,4) increases from the bow to the stern.

3. : A multi-hull boat according to claim 1, wherein the bottom (22) of the central hulls (3) is more inclined from the bow to the stern than the one (6) of the lateral outer hulls.

4. : A multi-bull boat according to claim 1, wherein the watertight bottom faces (2₁) of the deck (2) parts located between two adjacent hulls (3, 4) are inclined to the surface of the water (1) in the stern part (10) of the boat.

5. : A multi-hull boat according to claim 1, further comprising mobile shutters (9) wherein positioned near the stern between two hulls (3,4), and at least partially closing off the passage of the air, the said shutters being designed to remain closed under the dynamic pressure of the air alone, and to reduce their profile partially on the passage of the water (20).

6. : A multi-hull boat according to claim 1, wherein the hydrofoil fins (8) situated at the front of the boat between whatever two hulls and at least one hydrofoil situated at the back area of the hulls, (7) forming a continuous fin of a length equal to the width of the boat, inserted partially in the space separating two adjacent hulls (3,4), consolidating the structure between hulls and are partly on the surface at nominal speed.

7. : A main-hull boat according to claim 1, wherein the exterior hulls (4) are dissymmetric, narrower, longer in the front of the boat than the central hulls (3) and consisting of at least two longitudinal parts, each forming an near semi hull, wherein the height of the exterior part (6) is bigger man me interior part (5) of the same hull, these given heights (H_{E}, H_{ic}) are taken in the same cross-cut plane and between the same horizontal reference (R) and the lowest part (Bₑ,B_{ic}) at the bottom of each part of the same hall.

8. : A multi hull boat according to claim 1, able to integrate a combination flexible and rigid hulls wherein a part (11,14,15,16) of these hulls, so called flexible, are achieved either by flexible hulls as far as the interior hulls are concerned or by flexible skirts as far the exterior hulls are concerned and consist of flexible material capable of partially flexing under hydrodynamic pressure of water (20) and of assuring water tight volumes of air (18) constricted between the opposing walls of two adjacent hulls.

9. : A multi-hull boat according to claim 1, wherein the cooling air from the engines and from the inboard equipment is injected under the deck (2) into at least one space (18) formed between two opposing hulls.

10. : A multi-hull boat according to claim 1, further comprising of articulated safety shutters (12, 13) located above and in the bow part of the boat, wherein these shutters being flattened (12) against the superstructures (21) of the boat in the normal position, and being designed to be raised (13) opening from the front into a safety position.

## Patentansprüche

1. Hochgeschwindigkeits-Mehrrumpfboot mit mindestens drei Rümpfen (3, 4), mitsamt externer Rümpfe und mindestens einem zentralen Rumpf und dessen Flächen (Si), während das Boot im Stillzustand auf einer stillen Wasserfläche (1) als schwimmend betrachtet wird, im Längsquerschnitt eines Raums (18), der begrenzt ist, erstens durch die zwei gegenüberliegende Wände (19) von zwei nebeneinander liegenden Rümpfen, zweitens durch die Wasseroberfläche (1) und drittens durch die Unterseite (21) des Decks (2) in Bezug zu dieser Wasseroberfläche, abnehmen wenn man sich vom Bug zum Heck bewegt, dadurch charakterisiert, dass das Boot in diesem Fall als über dem Wasser schwebend betrachtet wird, die Höhen (H) der Rümpfe, zwischen einer identischen waagerechten Referenz (R) und des niedrigsten des Teils (B) am Boden dieser Rümpfe, sind somit bei den externen Rümpfen (4) größer als bei mindestens einem zentralen Rumpf (3) in der selben waagerechten Schnittebene.

2. Mehrrumpfboot gemäss Patentanspruch 1, dadurch charakterisiert, dass in einem Querschnitt der Winkel (A), gebildet durch zwei gegenüberliegenden Wände (19) aller nebeneinander liegenden Rümpfe (3, 4), vom Bug aus betrachtet in Richtung des Hecks zunimmt.

3. Mehrrumpfboot gemäss Patentanspruch 1, dadurch charakterisiert, dass der Boden (22) der zentralen Rümpfe (3) stärker vom Bug aus in Richtung des Hecks geneigt ist als der (6), der seitlichen Aussenrümpfe (4).

4. Mehrrumpfboot gemäss Patentanspruch 1, dadurch charakterisiert, dass die äusseren Rümpfe (4) unsymmetrisch, weniger breit und in Richtung des Bugs länger sind als die zentralen Rümpfe und aus mindestens zwei länglichen Teilen bestehen, die jeweils sozusagen einen halben Rumpf bilden, dessen Höhe des äußeren Teils (6) größer ist als die des inneren Teils (5) desselben Rumpfes, wobei die besagten Höhen als im selben Querschnitt liegend und zwischen dem selben waagerechten Referenzpunkt (R) und dem niedrigsten Teil (Bi) des Bodens der jeweiligen Teile dieses selben Rumpfes.

5. Mehrrumpfboot gemäss Patentanspruch 1, das aus einer Kombination von nachgiebigen und starren Rümpfen bestehen kann, die dadurch charakterisiert sind, dass ein Teil (11, 14, 15, 16) dieser sogenannten nachgiebigen Rümpfe in Form von nicht starren Rümpfen bei den innen liegenden Rümpfe oder durch nachgiebige Wandbleche bei den äußeren Rümpfen hergestellt werden und aus nachgiebigem Material bestehen, das in der Lage ist teilweise dem Strömungsdruck des Wassers nachzugeben (20) und die Luftdichtigkeit der Volumen (18), die sich durch die gegenüberliegenden Wände von zwei nebeneinander liegenden Rümpfen (3, 4) ergeben zu gewährleisten.

6. Mehrrumpfboot gemäss Patentanspruch 1, dadurch charakterisiert, dass die die dichten Innenseiten (21) der Deckteile (2), die sich zwischen zwei nebeneinander liegenden Rümpfen (3, 4) befinden, in Richtung der Wasseroberfläche (1) im hinteren Teil des (10) Bootes geneigt sind.

7. Mehrrumpfboot gemäss Patentanspruch 1, dadurch charakterisiert, dass es mobile Klappen (9) umfaßt, die hinten zwischen zwei gegenüberliegenden Rümpfen (3, 4) montiert sind und zumindest teilweise den Luftdurchlass verhindern, wobei die Klappen in der Lage sind, lediglich durch den Luftströmungsdruck geschlossen zu bleiben und sich teilweise bei durchströmendem Wasser einzuziehen (20).

8. Mehrrumpfboot gemäss Patentanspruch 1, dadurch charakterisiert, dass es Tragflügel (8) besitzt, die sich im vorderen Teil des Bootes zwischen zwei beliebigen Rümpfen befinden und von denen mindestens Tragflügel sich hinter allen Rümpfen (7) befindet und dabei einen über die gesamte Breite durchgängigen Flügel bildet, der teilweise im Raum zwischen zwei nebeneinander liegenden Rümpfen (3, 4) integriert ist und somit alle Rümpfe miteinander verbindet, die teilweise bei Nominalgeschwindigkeit aus dem Wasser ragen.

9. Mehrrumpfboot gemäss Patentanspruch 1, dadurch charakterisiert, dass die Kühlluft der Antriebsmotoren und der Bordausrüstung unter der Brücke (2) in mindestens einem begrenzten Raum (18) zwischen zwei gegenüber liegenden Rümpfen eingeblasen wird.

10. Mehrrumpfboot gemäss Patentanspruch 1, dadurch charakterisiert, dass es über aneinander gekoppelte Sicherheitsklappen (12, 13) verfügt, die sich über dem Boot und seitlich vorne befinden und am Aufbau (21) des Bootes in normaler Position anliegen (12) und et in der Lage sind, nach vorne in eine Sicherheitsposition angehoben zu werden (13).
